# EUROPEAN PATENT APPLICATION

(11) **EP 4 826 538 A1**
(43) Date of publication of application: **21.10.2026**
(21) Application number: 26171948.8
(22) Date of filing: 13.04.2026
(51) Int. Cl.: G06F 9/50, G06Q 10/0631

(54) **SYSTEM AND METHOD FOR PROCESS AUTOMATION**

(30) Priority: 16.04.2025 KR 20250049791; 25.07.2025 KR 20250101738
(71) Applicant: Samsung SDS Co., Ltd., Seoul 05510 (KR)
(72) Inventor: Park, Jae Hyuk, 05510 Songpa-gu, Seoul (KR)
(74) Representative: Grünecker Patent- und Rechtsanwälte PartG mbB

(57) **Abstract**

A process automation system and method are provided. In one embodiment, a process automation system includes a static agent configured to determine, during execution of a workflow, that delegation of execution of a specific task included in the workflow is required, and an adaptive agent configured to execute the specific task based on context information associated with the specific task in response to a request from the static agent.

## Description

### CROSS REFERENCE TO RELATED APPLICATION

This application claims priority from Korean Patent Application Nos. 10-2025-0049791, filed on April 16, 2025, and 10-2025-0101738, filed on July 25, 2025, which are hereby incorporated by reference for all purposes as if fully set forth herein.

### BACKGROUND

Embodiments of the disclosure relate to artificial intelligence (AI)-based process automation technology.

Robotic process automation (RPA) or business process automation (BPA) is a technology in which an automation agent (or bot) automatically mimics and executes business processes that a user repeatedly performs, according to predefined rules.

In typical RPA- or BPA-based process automation, the process flow is predefined, and it is impossible to design the process automation unless an input variable or processing target is determined in advance. Such a structure has a limitation in that it restricts the scope of automation, because it cannot accommodate the unstructured nature of real-world business operations, such as changes in external environments, variability of processing targets, and exceptional situations. That is, conventional RPA- or BPA-based process automation is executed according to a structured flow and a fixed workflow, and therefore has difficulty handling steps that require complex or exceptional decision-making.

Meanwhile, as a means to overcome the limitations of conventional RPA- or BPA-based agents, large language model (LLM)-based agent technologies are being developed. An LLM-based agent has an advantage in that it can understand a user's intent and purpose and actively solve problems by combining various tools. However, LLM-based agents have a lower goal-achievement success rate than conventional RPA/BPA-based agents and have weaknesses in aspects such as consistency and speed of process execution.

The information disclosed in the Background section is only provided for a better understanding of the background and should not be taken as an acknowledgment or any form of suggestion that this information forms prior art that would already be known to a person having ordinary skill in the art.

### SUMMARY

Embodiments of the disclosure are directed to providing a technical means for effectively dealing with variable situations that may occur at a specific step during execution of a structured process in a process automation system.

According to an exemplary embodiment, there is provided a process automation system comprising: a static agent configured to, during execution of a workflow, determine that delegation of execution of a specific task included in the workflow is required; and an adaptive agent configured to, in response to a request from the static agent, execute the specific task based on context information associated with the specific task.

**In** one embodiment, the static agent may be configured to determine that the delegation of execution of the specific task is required in a case where one or more of execution conditions of the specific task and an execution target of the specific task is variable.

**In** one embodiment, the adaptive agent may be a large language model-based agent or a reinforcement learning-based agent.

**In** one embodiment, the adaptive agent may be configured to obtain, from the static agent, a result of a preceding task of the specific task and the context information.

**In** one embodiment, the context information may include a natural language-based operation specification for the adaptive agent to execute the specific task.

**In** one embodiment, the adaptive agent may be configured to, based on the operation specification, divide the specific task into one or more subtasks.

**In** one embodiment, the adaptive agent may be configured to, through natural language-based semantic inference on the operation specification, generate the one or more subtasks and respective natural language-based detailed operation specifications for the respective subtasks.

**In** one embodiment, the adaptive agent may be configured to sequentially execute the one or more subtasks based on the detailed operation specifications.

**In** one embodiment, the adaptive agent may be configured to provide an execution result of a specific subtask among the one or more subtasks as input to a subsequent one of the one or more subtasks.

In one embodiment, the adaptive agent may be configured to provide an execution result of the specific task to the static agent, and the static agent may be configured to execute a subsequent task in the workflow based on the execution result of the specific task.

According to another exemplary embodiment, there is provided a process automation method comprising: determining, at a static agent, during execution of a workflow, that delegation of execution of a specific task included in the workflow is required; requesting, at the static agent, that an adaptive agent execute the specific task; and executing, at the adaptive agent, the specific task based on context information associated with the specific task.

**In** one embodiment, the static agent may be configured to determine that the delegation of execution of the specific task is required in a case where one or more of execution conditions of the specific task and an execution target of the specific task is variable.

**In** one embodiment, the adaptive agent may be a large language model-based agent or a reinforcement learning-based agent.

**In** one embodiment, the requesting execution of the specific task may further comprise providing, from the static agent to the adaptive agent, a result of a preceding task of the specific task and the context information.

In one embodiment, the context information may include a natural language-based operation specification for the adaptive agent to execute the specific task.

In one embodiment, the executing the specific task may further comprise dividing, based on the operation specification, the specific task into one or more subtasks.

In one embodiment, the dividing of the specific task into the one or more subtasks may comprise generating, through natural language-based semantic inference on the operation specification, the one or more subtasks and respective natural language-based detailed operation specifications for the respective subtasks.

In one embodiment, wherein the executing the specific task may further comprise sequentially executing the one or more subtasks based on the detailed operation specifications

In one embodiment, the adaptive agent may be configured to provide an execution result of a specific subtask among the one or more subtasks as input to a subsequent one of the one or more subtasks.

In one embodiment, the method may further comprise, after the executing of the specific task: providing, at the adaptive agent, an execution result of the specific task to the static agent, and executing, at the static agent, a subsequent task in a workflow based on the execution result of the specific task.

According to embodiments of the disclosure, it is possible to effectively handle variable situations that may occur at a specific step during execution of a structured workflow by flexibly linking an adaptive agent when needed in the course of workflow execution. Accordingly, the applicable scope of automation can be significantly expanded by securing partially autonomous processing capabilities through the adaptive agent while maintaining the stability and reliability of a static workflow.

### DESCRIPTION OF DRAWINGS

The above and other objectives, features, and advantages of the disclosure will be more clearly understood from the following detailed description, taken in conjunction with the accompanying drawings, in which:
FIG. 1 is a block diagram illustrating a process automation system according to an embodiment.
FIG. 2 is a diagram illustrating a workflow according to an embodiment.
FIG. 3 is a diagram illustrating a hybrid workflow according to an embodiment.
FIG. 4 is a diagram illustrating an example of a user interface that may be used to generate an adaptive task according to an embodiment.
FIG. 5 is a diagram illustrating an example of a user interface for dividing the adaptive task of FIG. 4 into one or more subtasks based on an operation specification of the adaptive task shown in FIG. 4.
FIG. 6 is a flowchart illustrating a method for delegating task execution within a workflow according to an embodiment.
FIG. 7 is a block diagram illustrating a computing environment including a computing device suitable for use in exemplary embodiments.

### DETAILED DESCRIPTION

Hereinafter, specific embodiments and implementations of the present disclosure will be described with reference to the accompanying drawings. The following detailed description is provided to assist in gaining a comprehensive understanding of at least one of a method, a device, and a system to be described hereafter. However, the detailed description is merely exemplary, and the disclosure is not limited thereto.

In the description of embodiments of the disclosure, a detailed description of known technologies related to the disclosure will be omitted in a case in which the subject matter of the disclosure may be rendered unclear thereby. Terms to be used hereinafter will be defined in consideration of functions thereof in embodiments of the disclosure, but may vary depending on the intentions of users or operators, as well as practices. Therefore, the terms shall be defined on the basis of the descriptions throughout the specification. The terms used in the detailed description shall be interpreted as being illustrative, while not being limitative, of embodiments of the disclosure. Unless clearly used otherwise, a singular form includes a plural meaning. It shall be understood that expressions such as "comprise," "include," and "have," as used herein, are for indicating particular features, numbers, steps, operations, elements, or a portion or combinations thereof and are not to be interpreted as excluding the presence or possibility of one or more features, numbers, steps, operations, elements, or a portion or combinations thereof other than those described above.

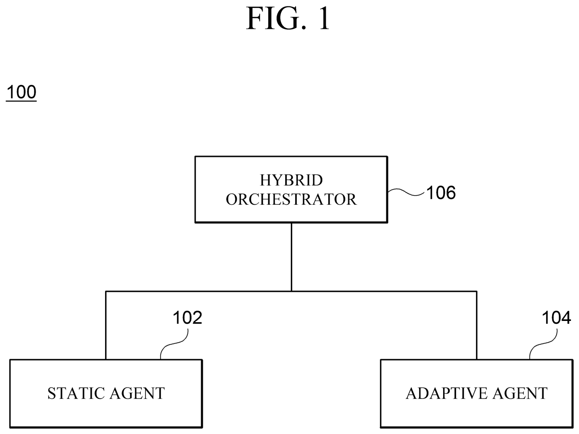

FIG. 1 is a block diagram illustrating a process automation system according to an embodiment. As shown in FIG. 1, in an embodiment, the process automation system 100 includes a static agent 102, an adaptive agent 104, and a hybrid orchestrator 106.

In the disclosed embodiments, the static agent 102, the adaptive agent 104, and the hybrid orchestrator 106 may be implemented by one or more computing devices. In one embodiment, respective functions of the static agent 102, the adaptive agent 104, and the hybrid orchestrator 106 may be implemented within a single computing device. In another embodiment, respective functions of the static agent 102, the adaptive agent 104, and the hybrid orchestrator 106 may be implemented by a plurality of computing devices. In some embodiments, some or all of the functions provided by the static agent 102, the adaptive agent 104, and the hybrid orchestrator 106 may further be implemented in a cloud computing environment.

In the disclosed embodiments, the static agent 102 refers to an agent that is responsible for executing structured business tasks (or processes) using a robotic process automation (RPA) or business process automation (BPA) approach.

The static agent 102 is primarily configured to perform tasks according to predefined workflows or rules. The static agent 102 is optimized for repetitive and structured tasks and has advantages in that it operates at high speed and with stability. In addition, because it is suitable for rule-based and structured tasks, it is well suited to a centralized orchestration approach. Examples of the static agent 102 include a sales slip entry bot, an automatic mailer that sends KPI reports at a fixed time every day, and a periodic file backup agent.

The adaptive agent 104 refers to an agent that is implemented, for example, based on a large language model (LLM) or reinforcement learning, and that actively makes decisions and takes actions based on real-time context understanding and user intent.

The adaptive agent 104, rather than following predefined workflows or rules, makes decisions in real time based on user queries, user actions, or context and responds flexibly depending on the situation. To this end, the adaptive agent 104 includes a combination of functions such as natural language processing, intent analysis, reasoning, and situation assessment. Examples of the adaptive agent 104 include an agent that, in response to a request such as "summarize our department's sales for this quarter," aggregates data from various systems and provides an explanation, an agent that adjusts a schedule in coordination with a calendar based on a schedule-change request that occurs in a messenger conversation, and an agent that summarizes business emails and drafts reply templates.

The hybrid orchestrator 106 integrally controls and coordinates the static agent 102 and the adaptive agent 104. Specifically, the hybrid orchestrator 106 recognizes a target task to be performed, selects, from among the static agent 102 and the adaptive agent 104, an agent to perform the task, and distributes the task to the selected agent.

In the disclosed embodiments, when a particular task (or process) is defined in the form of a workflow, the hybrid orchestrator 106 may distribute the task to the static agent 102. The static agent 102 may sequentially execute one or more tasks included in the workflow received from the hybrid orchestrator 106.

In the disclosed embodiments, a workflow refers to a series of flows in which tasks or activities required to achieve a particular objective proceed according to a predetermined order and rules. The workflow may be used as a term indicating a process from a start to an end of a process. For example, when there is a "report approval process" within a company, the entirety of tasks or activities included in the report approval process may be referred to as one workflow.

A workflow may include one or more tasks. In other words, a workflow may have a form in which one or more tasks are connected in a time series. A task refers to an individual and specific unit of work constituting a workflow. That is, each step or activity included in a larger a workflow may be defined as a respective task. For example, in the "report approval process" workflow, multiple tasks such as "report drafting," "initial review," "final approval," and "archiving the approved report" may be included.

In the embodiments of this specification, each piece of work included in a workflow is referred to as a "task", however, depending on the case, terms such as "activity" or "step" may be used instead of the term "task." Thus, it should be noted that the disclosed embodiments are not limited to any particular term used to refer to a process or each execution step of the process.

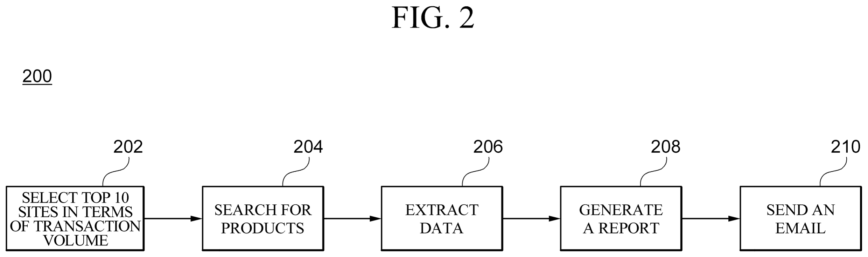

FIG. 2 is a diagram illustrating a workflow 200 according to an embodiment. The illustrated workflow 200 represents a workflow for a process of analyzing a product status of top online shopping sites in terms of transaction volume. As illustrated, the workflow 200 includes the following five tasks:
- task 202: selecting top ten sites in terms of transaction volume;
- task 204: searching for products;
- task 206: extracting data;
- task 208: generating a report; and
- task 210: sending an email.

Assuming that the workflow 200 illustrated in FIG. 2 is executed by the static agent 102. The static agent 102 is configured to perform each task according to predefined rules. However, the result of executing the task corresponding to task 202, i.e., "selecting top ten sites in terms of transaction volume," may vary each time the workflow 200 is executed, because the top sites by transaction volume can change in real time depending on market preferences. Likewise, the result of the product search in task 204 may also vary at each time of execution, since product sales rankings on the same shopping site can change from time to time.

Each task in the workflow is executed by reflecting the result of the preceding task. That is, in the workflow 200 illustrated in FIG. 2, task 204 and task 206 are also executed by reflecting the results of the preceding tasks, task 202 and task 204, respectively. However, as described above, since the execution results of task 202 and task 204 are variable, it is impossible to design task 204 and task 206 in a fixed, predefined form that can be executed by the static agent 102.

In order to solve this problem, in the disclosed embodiments, when it is determined that it is impossible for the static agent 102 to execute one or more tasks included in a workflow, the execution of the corresponding task is delegated to an adaptive agent 104. In other words, one or more of the tasks constituting the workflow may be designed to be suitable for the adaptive agent 104 rather than the static agent 102. In some embodiments, a task designed to be executed by the adaptive agent 104 is referred to as an adaptive task, and a workflow including one or more adaptive tasks is referred to as a hybrid workflow.

In one embodiment, when one or more of the execution conditions or execution targets of a specific task are variable, the static agent 102 may determine that delegation of the execution of that task is required. For example, when a task that has been pre-designed as an adaptive task is present, the static agent 102 may be configured to delegate the execution of that task to an adaptive agent 104.

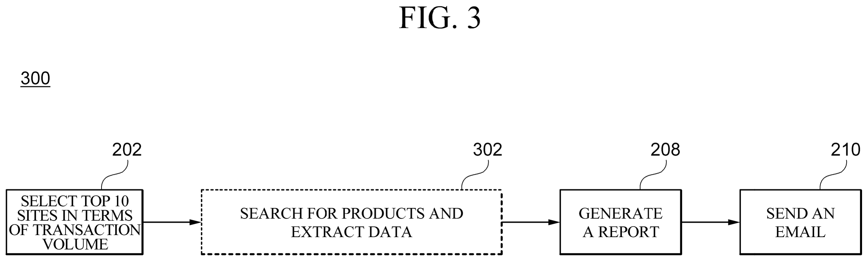

FIG. 3 is a diagram illustrating a hybrid workflow 300 according to an embodiment. The illustrated hybrid workflow 300 shows an example in which tasks 204 and 206 of the workflow 200 shown in FIG. 2 are replaced with an adaptive task 302. The adaptive task 302 may be defined as a task that performs product search and data extraction for each of the top ten sites in terms of transaction volume selected in task 202.

In one embodiment, the adaptive task may include context information required for the adaptive agent 104 to execute the adaptive task. The context information may include profile information of a user who executes the workflow and a natural language-based operation specification. The user profile information may include the user's department, job title, primary responsibilities, and key performance indicators (KPIs). In addition, the operation specification may include a natural language-based description for enabling the adaptive agent 104 to execute the adaptive task.

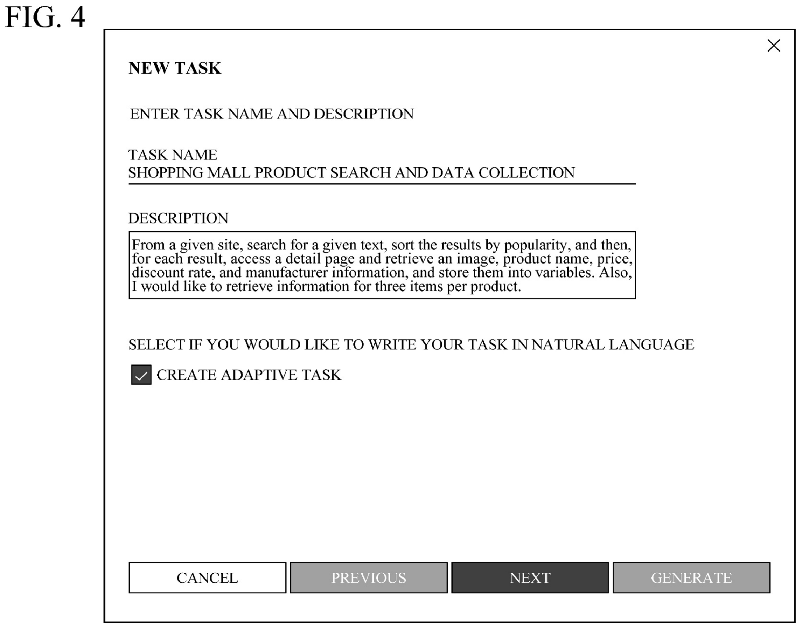

FIG. 4 is a diagram illustrating an example of a user interface that can be used to generate an adaptive task according to an embodiment. As illustrated, instead of authoring rules for executing a specific task, a designer of the hybrid workflow 300 may generate an operation specification of an adaptive task by describing, in natural language, a purpose of the task, information required for executing the task, a desired output value, and the like. For example, FIG. 4 shows an example in which the following operation specification (description) is input to create an adaptive task having a task name of "shopping mall product search and data collection."

"From a given site, search for a given text, sort the results by popularity, and then, for each result, access a detail page and retrieve an image, product name, price, discount rate, and manufacturer information, and store them into variables. Also, I would like to retrieve information for three items per product."

The adaptive agent 104 executes an adaptive task included in a workflow based on associated context information when execution of the adaptive task is requested by the static agent 102, and returns an execution result to the static agent 102.

The static agent 102 may request execution of an adaptive task by the adaptive agent 104 via a hybrid orchestrator 106. Likewise, the adaptive agent 104 may provide the execution result of the adaptive task to the static agent 102 via the hybrid orchestrator 106.

In one embodiment, the adaptive agent 104 may obtain a result of a previous task of an adaptive task and context information associated with the adaptive task from the static agent 102. The result and the context information may also be provided from the static agent 102 to the adaptive agent 104 via the hybrid orchestrator 106.

The adaptive agent 104 may divide the adaptive task into one or more subtasks based on an operation specification of the adaptive task included in the context information provided from the static agent 102. In this case, the adaptive agent 104 may generate, for each subtask, a detailed operation specification in natural language through natural language-based semantic inference on the operation specification. Depending on dependencies between subtasks, the adaptive agent 104 may execute the subtasks either sequentially or in parallel.

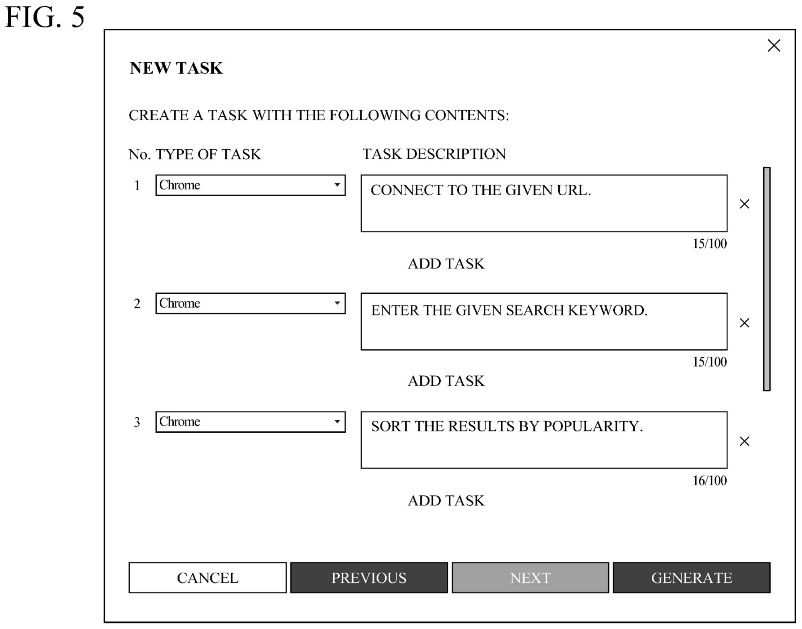

FIG. 5 is a diagram illustrating an example of a user interface for dividing the adaptive task shown in FIG. 4 into the following three subtasks based on the operation specification of the adaptive task shown in FIG. 4.
- Subtask 1: Connect to the given URL.
- Subtask 2: Enter the given search keyword.
- Subtask 3: Sort the results by popularity.

In one embodiment, the adaptive agent 104 may use a large language model (LLM) to generate one or more subtasks and a detailed operation specification for each subtask from the operation specification. In this case, a user may review the subtasks and detailed operation specifications generated by the adaptive agent 104 via the user interface screen of FIG. 5 and, if necessary, appropriately modify them.

The adaptive agent 104 may sequentially execute the one or more subtasks based on the detailed operation specifications generated through the above-described process. In this case, the adaptive agent 104 may link execution of the subtasks by providing a result of execution of each subtask as input to a subsequent subtask.

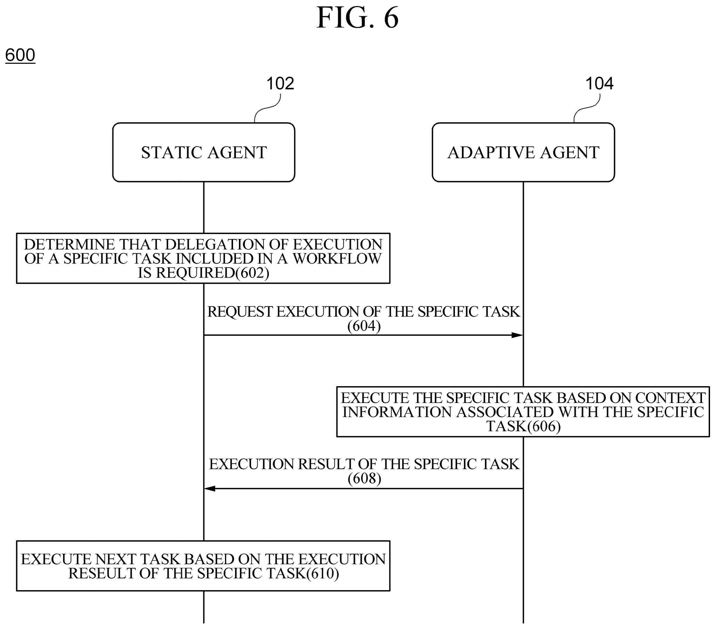

FIG. 6 is a flowchart illustrating a method 600 for delegating task execution within a workflow according to an embodiment. The illustrated method may be performed by a computing device including one or more processors and a memory storing one or more programs executed by the one or more processors, for example, the process automation system 100 described above. Although the flowchart illustrates the method or process as being divided into a plurality of steps, at least some of the steps may be performed in a different order, combined with other steps, omitted, divided into sub-steps, or performed together with one or more additional steps not illustrated.

At step 602, during execution of a workflow, the static agent 102 determines that delegation of execution of a specific task included in the workflow is required. In one embodiment, when one or more of execution conditions or execution targets of a specific task are variable, the static agent 102 may determine that delegation of execution of the specific task is required. In another embodiment, when a specific task has been designed as an adaptive task, the static agent 102 may determine to delegate execution of the task.

At step 604, the static agent 102 requests the adaptive agent 104 to execute the specific task. In this case, the static agent 102 may provide context information associated with the specific task together with the request. The static agent 102 may also provide a result of execution of a previous task of the specific task.

At step 606, the adaptive agent 104 executes the specific task based on the received context information.

In one embodiment, the adaptive agent 104 may divide the specific task into one or more subtasks based on a natural language-based operation specification included in the received context information. In this case, the adaptive agent 104 may generate the one or more subtasks and a detailed operation specification in natural language for each subtask through natural language-based semantic inference on the operation specification. The adaptive agent 104 may sequentially execute the one or more subtasks based on the generated detailed operation specifications. The adaptive agent 104 may link the subtasks by providing a result of execution of a specific subtask among the subtasks as input to a subsequent subtask.

At step 608, the adaptive agent 104 provides a task execution result, such as structured data, a generated report, or other output artifacts, to the static agent 102.

At step 610, the static agent 102 executes a next task of the specific task based on the received execution result of the specific task.

In some embodiments, at least some of the subtasks generated by the adaptive agent 104 may be tasks that identify user interface (UI) elements on a screen and perform actions specific to the recognized elements, such as clicking a button, checking a checkbox, or entering specific text into a text box. Such actions may be referred to as "UI interaction tasks."

A UI interaction task may include a target and an action. A target refers to a UI object identified on the screen by analyzing the screen. An action refers to an operation that can be performed according to information for each identified target and a type of the target. The actions may be classified into the following three types: an input action, a UI action, and an API action.

An input action refers to an action of directly controlling a mouse and a keyboard with respect to UI elements recognized on a screen. For example, when a button or a checkbox is recognized on the screen, the adaptive agent 104 may directly move the mouse or the keyboard to click or select the corresponding UI element. For this purpose, an appropriate screen recognition function may be required.

A UI action refers to an action that can be used when a target is a UI object type that is directly controllable. For example, for UIs such as buttons and checkboxes that are recognized as objects by an application or a browser, desired operations can be performed quickly and accurately by directly controlling the objects themselves, without moving the mouse or keyboard to click the corresponding UI.

An API action refers to an action that can be performed in an API calling manner when a target is a program or system that is controllable via an application programming interface (API). For example, operations of controlling applications that support API calls, such as a file system, mail system, and database, fall under this category.

In one embodiment, when two or more actions are available for one target, the adaptive agent 104 may select one of the actions according to a predetermined priority. For example, the adaptive agent 104 may set priorities in the order of an API action, a UI action, and an input action, and may first select an action having a higher priority.

In one embodiment, the adaptive agent 104 may perform the actions using a computer using agent (CUA) or a robotic process automation (RPA)-based bot. For example, for API actions or UI actions that do not require vision analysis-based recognition of elements on a screen, the adaptive agent 104 may use a rule-based bot to perform the actions, thereby reducing computational load and performing desired operations quickly and accurately.

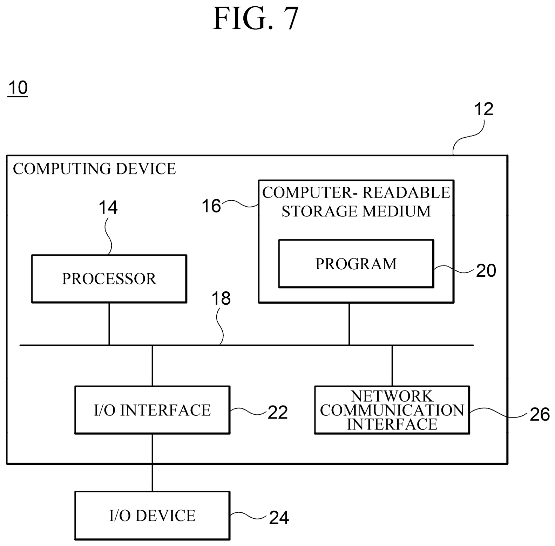

FIG. 7 is a block diagram illustrating a computing environment including a computing device suitable for use in example embodiments. In the illustrated embodiment, respective components may have functions and capabilities other than those described below, and other components not described hereafter may also be included.

A computing environment 10 shown in FIG. 7 includes a computing device 12. In some embodiments, the computing device 12 may be any of the static agent 102, the adaptive 104 or the hybrid orchestrator 106 according to embodiments. The computing device 12 includes at least one processor 14, a computer-readable storage medium 16, and a communication bus 18. The processor 14 may allow the computing device 12 to operate according to the example embodiments described above. For example, the processor 14 may execute one or more programs stored in the computer-readable storage medium 16. The one or more programs may include one or more computer-executable instructions, which may be configured to enable the computing device 12 to perform operations according to the example embodiments when executed by the processor 14.

The computer-readable storage medium 16 may be configured to store computer-executable instructions, program codes, program data, and/or other suitable forms of information. A program 20 stored in the computer-readable storage medium 16 may include a set of instructions executable by the processor 14. In an embodiment, the computer-readable storage medium 16 may be a memory (e.g., a volatile memory such as a random access memory (RAM), a non-volatile memory, or a combination thereof), one or more magnetic disk storage devices, optical disk storage devices, flash memory devices, other types of storage media which may be accessed by the computing device 12 and store intended information, or a suitable combination thereof.

The communication bus 18 may interconnect various components of the computing device 12 to each other, such as the processor 14 and the computer-readable storage medium 16.

The computing device 12 may also include one or more input/output (I/O) interfaces 22 providing an interface for one or more I/O devices 24 and one or more network communication interfaces 26. The I/O interface 22 and the network communication interfaces 26 may be connected to the communication bus 18. The illustrated I/O devices 24 may include input devices, such as a pointing device (e.g., a mouse or a track pad), a keyboard, a touch input device (e.g., a touch pad or a touch screen), a voice or sound input device, various types of sensors, and/or an image-capturing device, and/or output devices, such as a display device, a printer, a speaker, and/or a network card. Each of the illustrated I/O devices 24 may be included in the computing device 12 as one component of the computing device 12 or connected to the computing device 12 as a device separate from the computing device 12.

Although the exemplary embodiments of the disclosure have been described in detail hereinabove, a person having ordinary knowledge in the technical field to which the disclosure pertains will appreciate that various modifications are possible to the foregoing embodiments without departing from the scope of the disclosure. Therefore, the scope of the disclosure shall not be limited to the foregoing embodiments but shall be defined by the appended Claims and equivalents thereof.

## Claims

1. A process automation system comprising:
a static agent (102) configured to, during execution of a workflow, determine that delegation of execution of a specific task included in the workflow is required; and
an adaptive agent (104) configured to, in response to a request from the static agent (102), execute the specific task based on context information associated with the specific task.

2. The process automation system of claim 1, wherein the static agent (102) is configured to determine that the delegation of execution of the specific task is required in a case where one or more of execution conditions of the specific task and an execution target of the specific task are variable.

3. The process automation system of claim 1, wherein the adaptive agent (104) is a large language model-based agent or a reinforcement learning-based agent.

4. The process automation system of claim 1, wherein the adaptive agent (104) is configured to obtain, from the static agent (102), a result of a preceding task of the specific task and the context information.

5. The process automation system of claim 1, wherein the context information includes a natural language-based operation specification for the adaptive agent (104) to execute the specific task.

6. The process automation system of claim 5, wherein the adaptive agent (104) is configured to, based on the operation specification, divide the specific task into one or more subtasks.

7. The process automation system of claim 6, wherein the adaptive agent (104) is configured to, through natural language-based semantic inference on the operation specification, generate the one or more subtasks and respective natural language-based detailed operation specifications for the respective subtasks.

8. The process automation system of claim 7, wherein the adaptive agent (104) is configured to sequentially execute the one or more subtasks based on the detailed operation specifications.

9. The process automation system of claim 8, wherein the adaptive agent (104) is configured to provide an execution result of a specific subtask among the one or more subtasks as input to a subsequent one of the one or more subtasks.

10. The process automation system of claim 1, wherein the adaptive agent (104) is configured to provide an execution result of the specific task to the static agent (102), and
wherein the static agent (102) is configured to execute a subsequent task in the workflow based on the execution result of the specific task.

11. A process automation method comprising:
determining, at a static agent (102), during execution of a workflow, that delegation of execution of a specific task included in the workflow is required;
requesting, at the static agent (102), that an adaptive agent (104) execute the specific task; and
executing, at the adaptive agent (104), the specific task based on context information associated with the specific task.

12. The process automation method of claim 11, wherein the static agent (102) determines that the delegation of execution of the specific task is required in a case where one or more of execution conditions of the specific task and an execution target of the specific task are variable.

13. The process automation method of claim 11, wherein requesting execution of the specific task further comprises providing, from the static agent (102) to the adaptive agent (104), a result of a preceding task of the specific task and the context information.

14. The process automation method of claim 11, wherein the context information includes a natural language-based operation specification for the adaptive agent (104) to execute the specific task.

15. The process automation method of claim 14, wherein the executing the specific task further comprises dividing, based on the operation specification, the specific task into one or more subtasks by generating, through natural language-based semantic inference on the operation specification, the one or more subtasks and respective natural language-based detailed operation specifications for the respective subtasks.
